# FASCICULE DE BREVET EUROPEEN

(11) **EP 2 036 762 B1**
(45) Date de publication et mention de la délivrance du brevet: **19.10.2011**
(21) Numéro de dépôt: 08105360.5
(22) Date de dépôt: 16.09.2008
(51) Int. Cl.: B60K 37/06

(54) **Dispositif de commande électrique**
Elektronische Eingabevorrichtung
Electronic command unit

(30) Priorité: 17.09.2007 FR 0706529
(43) Date de publication de la demande: 18.03.2009
(73) Titulaire: DAV, 94046 Créteil Cedex (FR)
(72) Inventeur: Mounier, Laurent, 74106 Annemasse (FR); Tissot, Jean-Marc, 74106 Annemasse (FR)
(74) Mandataire: Croonenbroek, Thomas Jakob

(56) Documents cités:
- DE-A1- 10 120 465
- DE-A1- 10 322 614
- GB-A- 2 390 347

## Description

La présente invention concerne un dispositif de commande électrique.
Ce dispositif de commande électrique trouve une application particulière dans le secteur automobile.
Il peut être utilisé, par exemple, en tant que commande de tableau de bord ou de console centrale pour contrôler les différents équipements du véhicule (radio, climatisation, système de navigation ou un dispositif multimédia par exemple) et le réglage de leurs divers paramètres.

Afin d'accroître la sécurité et le confort des utilisateurs, les équipements automobiles sont de plus en plus nombreux et sophistiqués.
Dans l'état de la technique, chaque élément d'équipement possède ses propres commandes. Cela entraîne la multiplication du nombre de commandes localisées sur la planche de bord et associées aux réglages des différents paramètres de ces équipements. Plusieurs commandes peuvent être regroupées par l'adjonction de boutons de sélection satellites à une commande principale. Cette surcharge de commandes peut provoquer la dégradation de l'esthétique intérieure du véhicule. Or, dans un marché aussi concurrentiel que le secteur automobile, l'esthétique joue un rôle important et permet de se démarquer des autres constructeurs.
D'autre part, cette concentration de commandes sur la planche de bord peut entraîner une confusion ou des difficultés de manipulation chez l'utilisateur.

Le document DE 101 20 465 divulgue un dispositif de commande électrique selon le préambule de la revendication 1.

La présente invention a pour objectif de résoudre les inconvénients précités de l'état de la technique et de fournir un dispositif de commande électrique permettant d'une part de garder une planche de bord avec un aspect lisse de manière à obtenir des lignes fluides et une esthétique raffinée, et d'autre part d'améliorer l'ergonomie de commande.

A cet effet, l'invention concerne un dispositif de commande électrique, destiné à commander au moins un élément d'équipement d'un véhicule automobile, caractérisé en ce qu'il comporte un organe de commande électrique amovible, au moins une base, localisée dans l'habitacle du véhicule, comportant au moins une plage d'accueil de l'organe de commande électrique amovible et des premiers et seconds moyens de communication sans contact portés respectivement par l'organe de commande et par la base pour transmettre à la base les commandes appliquées par l'utilisateur au niveau de l'organe de commande électrique, et en ce qu'il comporte plusieurs bases situées à différents emplacements de l'habitacle du véhicule, chaque base étant associée à une fonction spécifique permettant la commande d'un élément d'équipement et étant activée par la présence d'un organe de commande électrique 1 sur la plage d'accueil correspondant à cette fonction.

D'autres caractéristiques et avantages de l'invention apparaîtront de la description qui va maintenant en être faite, en référence aux dessins annexés qui en représentent, à titre indicatif mais non limitatif, un mode de réalisation possible.

Sur ces dessins,
- la figure 1 est un schéma synoptique du dispositif de commande selon l'invention,
- la figure 2 est un schéma représentant un mode de réalisation du dispositif et,
- la figure 3 est un schéma d'un mode de réalisation particulier d'une surface d'accueil du dispositif de commande.

Les différents éléments du dispositif selon l'invention vont maintenant être décrits plus en détail en référence aux figures. Sur ces figures, les éléments identiques portent les mêmes numéros de référence.

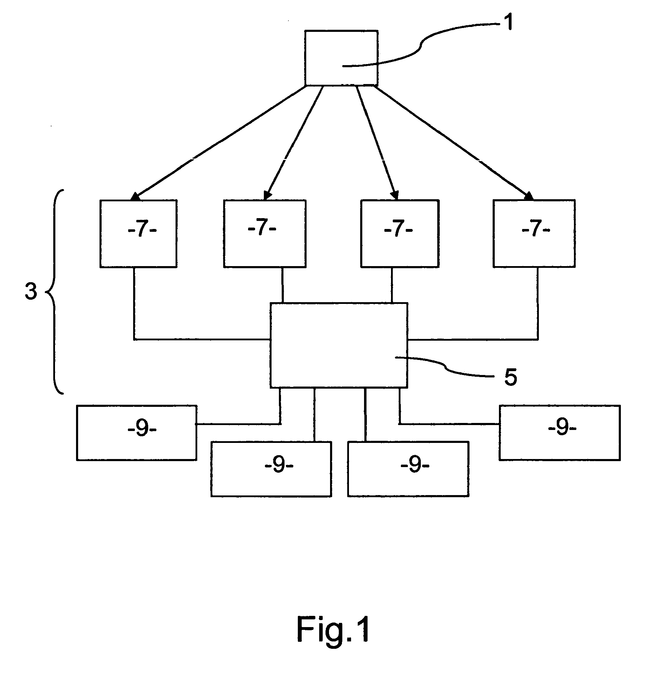

La figure 1 présente une vue globale d'un mode de réalisation de l'invention. En référence à cette figure, le dispositif de commande selon l'invention comporte un organe de commande électrique 1 et une base 3 située dans l'habitacle d'un véhicule. Cette dernière comprend un contrôleur 5 et au moins une, dans le présent cas quatre, plages d'accueil 7 reliées au contrôleur. L'organe de commande 1 est destiné à être positionné sur une telle plage d'accueil 7. Ces dernières sont placées de manière à être accessible facilement par l'utilisateur. De tels emplacements se situent, par exemple, au niveau de la planche de bord, de la console centrale, du tunnel central, d'un accoudoir, d'un panneau de porte, du plafonnier, d'un siège, ou du volant.

Les quatre plages d'accueil 7 correspondent chacune à un élément d'équipement 9 associé du véhicule. Le nombre de plages d'accueil 7 n'est pas limité et peut varier selon le nombre d'équipements 9 à commander. Les éléments d'équipement 9 du véhicule peuvent être, par exemple, le système audio, la climatisation ou le système de navigation. Il peut également s'agir d'équipements embarqués pouvant être pris en charge par le système électronique du véhicule tels qu'un téléphone muni d'un système « bluetooth ».

Le positionnement de l'organe de commande 1 sur l'une des plages d'accueil 7 entraîne l'activation de cette dernière. Le contrôleur 5 assure, pour une ou plusieurs plages d'accueil 7, la gestion des signaux de commande et leur transmission aux éléments d'équipement 9.

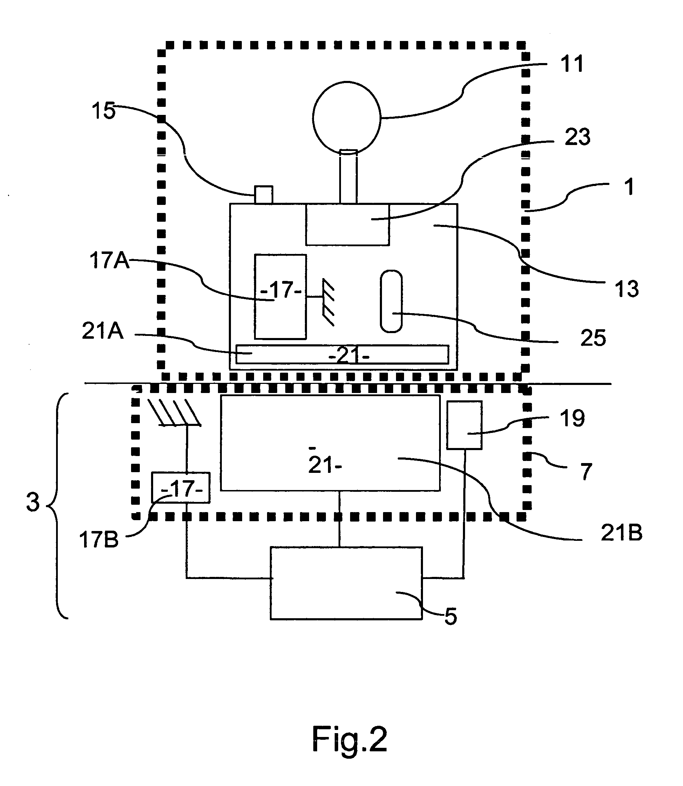

En référence à la figure 2, on décrira un exemple de réalisation d'un couple organe de commande 1 et plage d'accueil 7. L'organe de commande 1 comporte un élément de préhension 11 permettant la manipulation de l'organe de commande 1 par l'utilisateur. Cet élément de préhension 11 peut être réalisé par exemple sous la forme d'une manette de type « joystick », d'une molette, d'un bouton rotatif, d'un interrupteur ou d'une surface tactile. Dans le présent exemple, l'élément de préhension est un « joystick » porté par une embase 13 qui assure d'une part la conversion du mouvement mécanique de l'élément 11 en un signal électrique et d'autre part le retour en position de repos de l'élément de préhension 11 lorsqu'il est relâché par l'utilisateur.

Des moyens de communication 17 permettent de transmettre, entre l'embase 13 de l'organe de commande 1 et la plage d'accueil 7, les signaux électriques de commande. Les moyens de communication 17 comprennent par exemple un transpondeur 17A au niveau de l'organe de commande 1 et un module émetteur/récepteur 17B correspondant au niveau de la plage d'accueil 7 permettant de recevoir les signaux envoyés par l'organe de commande 1 et de les transmettre au contrôleur 5.
Alternativement, ces moyens de communication 17 peuvent être réalisés par au moins un aimant mobile en fonction d'une commande appliquée par l'utilisateur au niveau de l'élément de préhension 11 et au moins un capteur de position à effet Hall au niveau de la plage 7.
Dans ces deux cas, les moyens de communication 17 présentent l'avantage de ne pas nécessiter d'alimentation électrique propre au niveau de l'organe de commande 1.

Afin de maintenir l'organe de commande 1 en position sur la plage d'accueil 7, en particulier lorsque cette dernière est une surface inclinée, on prévoit des moyens de maintien 21 comportant par exemple un électro-aimant 21B au niveau de la base qui interagit avec un aimant ou une surface métallique 21A du module de commande 1. Dans ce cas, l'intensité de l'interaction magnétique peut être ajustée de manière à obtenir deux positions, l'une assurant le maintien de l'organe de commande 1 tout en permettant son déplacement et l'autre plus intense entraînant la fixation de l'organe 1 sur la plage d'accueil 7. Cette fixation permet d'éviter un déplacement involontaire de l'organe de commande 1 lors de sa manipulation lorsqu'il se trouve sur la plage d'accueil désirée.
Pour passer d'une position à l'autre, un actionneur de verrouillage et déverrouillage 15 peut être placé sur l'organe de commande. L'activation de cet actionneur 15 entraîne l'envoi d'un signal au contrôleur 5 qui agit alors sur l'électro-aimant 21B pour faire varier l'intensité du champ magnétique produit par ce dernier.
Alternativement, la commande de verrouillage et de déverrouillage peut être réalisée par l'intermédiaire d'un microphone placé dans l'habitacle du véhicule et relié à un dispositif de reconnaissance vocale, lui-même relié au contrôleur.
Les moyens de maintien 21 peuvent également être réalisés par un système d'encliquetage ou par un couple d'aimants de polarité opposée, l'un étant placé sur le module de commande et l'autre au niveau de la base.

La plage 7 comporte un détecteur de présence 19 permettant la détection de l'organe de commande 1 lorsque ce dernier est à proximité. Ce détecteur 19 est par exemple réalisé sous forme d'un capteur optique, tactile ou magnétique. Cette détection permet d'activer les moyens de maintien 21B et les moyens de communication 17B de la base. Selon un mode préférentiel, les moyens de communication 17B peuvent également jouer le rôle de détecteur de présence. A cet effet, l'émetteur/récepteur 17B est dans un mode « veille » où il émet de façon régulière des signaux afin d'établir une communication avec le transpondeur 17A. Lorsque l'organe de commande 1 s'approche de la plage 7, la communication s'établit et un signal est transmis au contrôleur. Ce dernier active les différents éléments de la plage d'accueil correspondante. L'émetteur/récepteur 17B passe dans un mode « communication » où l'intervalle de temps entre chacune de ses émissions est réduit de manière à obtenir une communication permanente.
De même, dans l'autre mode de réalisation des moyens de communication 17, un capteur à effet Hall peut détecter la présence d'un aimant de l'organe de commande et transmettre l'information au contrôleur 5.

Préférentiellement, on prévoit des composants tel qu'un vibreur 23 permettant un retour tactile au niveau de l'organe de commande 1 lors de la validation d'une commande. Ce vibreur 23 est piloté par le contrôleur 5.
L'alimentation électrique du vibreur 23 peut être assurée par exemple par une batterie 25. De préférence, cette batterie 25 est rechargeable par un chargeur électro-magnétique. Ce dernier peut être situé au niveau de la plage d'accueil 7 ou dans un espace de rangement de l'organe de commande.

Afin de permettre le repérage des différentes plages d'accueil 7 et la fonction qui leur est associée, on envisage que les plages d'accueil 7 sont rétro-éclairées, de manière permanente ou, de préférence, lorsque la présence de l'organe de commande 1 est détectée.

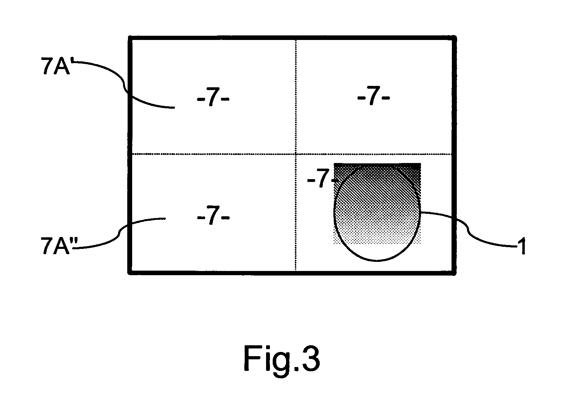

Un autre mode de réalisation de la présente invention est représenté sur la figure 3. Dans ce mode de réalisation, plusieurs, quatre dans le présent cas, plages d'accueil 7 sont disposées, avantageusement, de façon adjacente. Chacune d'elles correspond à une fonction particulière d'un même élément d'équipement 9 comme par exemple au volume sonore 7A' ou au balayage en fréquence des stations 7A" du système audio. Ainsi les plages d'accueils 7 correspondant aux fonctions d'un même élément d'équipement 9 sont regroupées de manière à faciliter la localisation des emplacements des plages d'accueil 7.

Le fonctionnement du dispositif va maintenant être décrit plus en détail.

On suppose que l'organe de commande 1 est placé dans un rangement à portée de main de l'utilisateur. Lorsque ce dernier veut agir sur un élément d'équipement 9 pour modifier une de ses fonctions , par exemple changer la température de consigne de la climatisation, il saisit l'organe de commande 1 et le place sur la plage d'accueil 7 de la fonction correspondante.
Lorsque l'utilisateur approche l'organe de commande 1 d'une plage d'accueil 7, le capteur de présence 19 de cette dernière détecte la proximité de l'organe de commande 1. Un signal est envoyé au contrôleur 5 qui pilote alors l'activation du rétro-éclairage, des moyens de communication 17B et des moyens de maintien 21B de la plage d'accueil correspondante.
Une fois l'organe de commande 1 placé à l'endroit désiré, l'utilisateur peut alors le fixer sur la plage d'accueil 7 grâce au système de verrouillage par le biais d'un actionneur ou d'une commande vocale.
Dans l'exemple précédent, l'utilisateur fixe l'organe de commande sur la plage d'accueil 7 correspondant à la température. L'organe de commande 1 est alors solidaire de cette plage d'accueil 7 et l'utilisateur peut agir sur l'élément de préhension 11 afin de commander la fonction correspondante. La manipulation de la commande entraîne la création d'un signal électrique au sein de l'organe de commande 1, ce signal est alors transmis à la base 3 grâce aux moyens de communication 17 puis arrive jusqu'au contrôleur 5. Ce dernier transmet alors la commande à l'élément d'équipement 9 correspondant et envoie un signal d'activation au vibreur 23 par le biais des moyens de communication 17 afin de produire un retour tactile d'activation. Ainsi l'utilisateur peut modifier la consigne de température jusqu'à la valeur désirée en manipulant l'élément de préhension 11.
Lorsque la manipulation est terminée, l'utilisateur déverrouille la fixation puis repositionne l'organe de commande 1 soit sur une autre plage d'accueil 7 s'il veut modifier d'autres paramètres soit dans son rangement.

Ainsi, une unique commande peut servir pour différents éléments d'équipement et permettre de garder des surfaces lisses afin d'améliorer l'esthétique intérieure du véhicule.

## Revendications

1. Dispositif de commande électrique, destiné à commander au moins un élément d'équipement (9) d'un véhicule automobile, comportant:
- un organe de commande électrique amovible (1),
- au moins une base (3), localisée dans l'habitacle du véhicule, comportant au moins une plage d'accueil (7) de l'organe de commande électrique amovible (1) et,
- des premiers et seconds moyens de communication sans contact (17) portés respectivement par l'organe de commande (1) et par la base (3) pour transmettre à la base (3) les commandes appliquées par l'utilisateur au niveau de l'organe de commande électrique (1),
**caractérisé en ce qu'**il comporte plusieurs bases (3) situées à différents emplacements de l'habitacle du véhicule, chaque base (3) étant associée à une fonction spécifique permettant la commande d'un élément d'équipement (9) et étant activée par la présence d'un organe de commande électrique 1 sur la plage d'accueil (7) correspondant à cette fonction.

2. Dispositif de commande selon la revendication 1, **caractérisé en ce qu'**il comporte au moins deux plages d'accueil (7) disposées de façon adjacente.

3. Dispositif de commande électrique selon la revendication 1 ou 2, **caractérisé en ce que** la plage d'accueil (7) de la base (3) destinée à recevoir l'organe de commande électrique (1) se situe au niveau d'un des emplacements prédéterminés suivants: la planche de bord, la console centrale, le tunnel central, un accoudoir, un panneau de porte, un plafonnier, un siège ou le volant.

4. Dispositif de commande électrique selon l'une des revendications 1 à 3, **caractérisé en ce que** les moyens de communication (17) entre l'organe de commande électrique (1) et la base (3) comportent une antenne (17A) au niveau de la base (3) et un transpondeur (17B) au niveau du module de commande (1).

5. Dispositif de commande électrique selon l'une des revendications 1 à 3, **caractérisé en ce que** les moyens de communication (17) entre l'organe de commande (1) et la base (3) comportent au moins un capteur de position à effet Hall porté par la base (3) et au moins un aimant mobile en fonction d'une commande appliquée porté par l'organe de commande (1).

6. Dispositif de commande électrique selon l'une des revendications 1 à 5, **caractérisé en ce qu'**il comporte des premiers et seconds moyens de maintien complémentaires (21) portés respectivement par l'organe de commande (1) et par la plage d'accueil (7).

7. Dispositif de commande électrique selon la revendication 6, **caractérisé en ce que** les premiers et seconds moyens de maintien (21) comprennent des moyens d'encliquetage.

8. Dispositif de commande électrique selon la revendication 6, **caractérisé en ce que** les premiers et seconds moyens de maintien (21) comprennent des moyens magnétiques,
de préférence des aimants de polarité opposée ou un électro-aimant (21 B) au niveau de la base (3) et une surface métallique (21A) sur l'organe de commande électrique (1).

9. Dispositif de commande électrique selon la revendication 8, **caractérisé en ce qu'**il comprend un système de verrouillage par bridage magnétique permettant de fixer l'organe de commande (1) à la plage d'accueil (7).

10. Dispositif de commande électrique selon la revendication 9, **caractérisé en ce que** le système de verrouillage comprend un moyen de reconnaissance vocale capable de traduire l'information sonore envoyée par l'utilisateur en signal électrique exploitable par le système de verrouillage pour permettre son activation ou sa désactivation.

11. Dispositif de commande électrique selon l'une des revendications 1 à 10, **caractérisé en ce que** la base (3) comprend au moins un détecteur de présence (19) de l'organe de commande électrique destiné à activer les moyens de communication (17) de la base (3).

12. Dispositif de commande électrique selon les revendications 7 et 11 prises ensemble, **caractérisé en ce que** le détecteur de présence (19) de l'organe de commande électrique est également destiné à activer l'électro-aimant.

13. Dispositif de commande électrique selon la revendication 11 ou 12, **caractérisé en ce que** le au moins un détecteur de présence (19) comporte un capteur optique, tactile ou magnétique.

14. Dispositif selon les revendications 4 ou 5 prises ensemble avec la revendication 11, **caractérisé en ce que** les moyens de communication (17) entre l'organe de commande électrique (1) et la base (3) permettent la détection de présence de l'organe de commande électrique (1).

15. Dispositif de commande électrique selon l'une des revendications 1 à 14, **caractérisé en ce qu'**il comporte au niveau de l'organe de commande électrique (1) des composants permettant un retour tactile.

16. Dispositif de commande électrique selon l'une des revendications 1 à 15, **caractérisé en ce que** la plage d'accueil (7) comporte des moyens de repérage permettant d'identifier sa fonction, de préférence, un rétro-éclairage.

## Claims

1. Electric control device, intended to control at least one equipment element (9) of a motor vehicle, comprising:
- a removable electric control member (1),
- at least one base (3), located in the passenger compartment of the vehicle, comprising at least one receptacle (7) for the removable electric control member (1) and,
- first and second contactless communication means (17) borne respectively by the control member (1) and the base (3) for transmitting to the base (3) the commands applied by the user on the electric control member (1),
**characterized in that** it comprises a number of bases (3) situated at different places in the vehicle passenger compartment, each base (3) being associated with a specific function making it possible to control an equipment element (9) and being activated by the presence of an electric control member (1) on the receptacle (7) corresponding to this function.

2. Electric control device according to Claim 1, **characterized in that** it comprises at least two receptacles (7) arranged adjacent to one another.

3. Electric control device according to Claim 1 or 2, **characterized in that** the receptacle (7) of the base (3) intended to receive the electric control member (1) is situated at one of the following predetermined place: dashboard, the central console, the central tunnel, an armrest, a door panel, a dome light, a seat or the steering wheel.

4. Electric control device according to one of Claims 1 to 3, **characterized in that** the means of communication (17) between the electric control member (1) and the base (3) include an antenna (17A) in the base (3) and a transponder (17B) in the control module (1).

5. Electric control device according to one of Claims 1 to 3, **characterized in that** the means of communication (17) between the control member (1) and the base (3) include at least one Hall effect position sensor borne by the base (3) and at least one moving magnet that moves according to an applied command borne by the control member (1).

6. Electric control device according to one of Claims 1 to 5, **characterized in that** it includes first and second additional holding means (21) borne respectively by the control member (1) and by the receptacle (7).

7. Electric control device according to Claim 6, **characterized in that** the first and second holding means (21) comprise snap-fitting means.

8. Electric control device according to Claim 6, **characterized in that** the first and second holding means (21) comprise magnetic means, preferably magnets of opposite polarity or an electromagnet (21B) in the base (3) and a metallic surface (21A) on the electric control member (1).

9. Electric control device according to Claim 8, **characterized in that** it comprises a magnetic clamping locking system making it possible to secure the control member (1) to the receptacle (7).

10. Electric control device according to Claim 9, **characterized in that** the locking system comprises a voice recognition means capable of translating sound information sent by the user into an electrical signal that can be used by the locking system to enable it to be activated or deactivated.

11. Electric control device according to one of Claims 1 to 10, **characterized in that** the base (3) includes at least one presence detector (19) for detecting the presence of the electric control member intended to activate the communication means (17) of the base (3).

12. Electric control device according to Claims 7 and 11 taken together, **characterized in that** the presence detector (19) of the electric control member is also intended to activate the electromagnet.

13. Electric control device according to Claim 11 or 12, **characterized in that** the at least one presence detector (19) comprises an optical, tactile or magnetic sensor.

14. Device according to Claims 4 or 5 taken together with Claim 11, **characterized in that** the means of communication (17) between the electric control member (1) and the base (3) make it possible to detect the presence of the electric control member (1).

15. Electric control device according to one of Claims 1 to 14, **characterized in that** it includes, in the electric control member (1), components providing tactile feedback.

16. Electric control device according to one of Claims 1 to 15, **characterized in that** the receptacle (7) includes identification means making it possible to identify its function, preferably a backlighting.

## Patentansprüche

1. Elektrische Steuervorrichtung, die dazu bestimmt ist, wenigstens ein Ausstattungselement (9) eines Kraftfahrzeugs zu steuern, die umfasst:
- ein entnehmbares elektrisches Steuerorgan (1),
- wenigstens eine Basis (3), die sich im Fahrgastraum des Fahrzeugs befindet und wenigstens einen Aufnahmebereich (7) für das entnehmbare elektrische Steuerorgan (1) aufweist, und
- erste und zweite kontaktlose Kommunikationsmittel (17), die von dem Steuerorgan (1) bzw. von der Basis (3) getragen werden, um zu der Basis (3) die Befehle zu übertragen, die von dem Anwender auf Seiten des elektrischen Steuerorgans (1) eingegeben werden,
**dadurch gekennzeichnet, dass** sie mehrere Basen (3) umfasst, die sich an verschiedenen Stellen des Fahrgastraums des Fahrzeugs befinden, wobei jeder Basis (3) eine bestimmte Funktion zugeordnet ist, die die Steuerung eines Ausstattungselements (9) ermöglicht und durch das Vorhandensein eines elektrischen Steuerorgans (1) in dem Aufnahmebereich (7), das dieser Funktion entspricht, aktiviert wird.

2. Elektrische Steuervorrichtung nach Anspruch 1, **dadurch gekennzeichnet, dass** sie wenigstens zwei benachbart angeordnete Aufnahmebereiche (7) umfasst.

3. Elektrische Steuervorrichtung nach Anspruch 1 oder 2, **dadurch gekennzeichnet, dass** sich der Aufnahmebereich (7) der Basis (3), der dazu bestimmt ist, das elektrische Steuerorgan (1) aufzunehmen, auf Seiten eines der folgenden vorgegebenen Orte befindet: Armaturenbrett, Mittelkonsole, Mitteltunnel, Armlehne, Türblatt, Deckenleuchte, Sitz oder Lenkrad.

4. Elektrische Steuervorrichtung nach einem der Ansprüche 1 bis 3, **dadurch gekennzeichnet, dass** die Kommunikationsmittel (17) zwischen dem elektrischen Steuerorgan (1) und der Basis (3) eine Antenne (17A) auf Seiten der Basis (3) und einen Transponder (17B) auf Seiten des Steuermoduls (1) umfassen.

5. Elektrische Steuervorrichtung nach einem der Ansprüche 1 bis 3, **dadurch gekennzeichnet, dass** die Kommunikationsmittel (17) zwischen dem Steuerorgan (1) und der Basis (3) wenigstens einen Hall-Effekt-Positionssensor, der von der Basis (3) getragen wird, und wenigstens einen Magneten, der als Funktion eines eingegebenen Befehls beweglich ist und von dem Steuerorgan (1) getragen wird, umfassen.

6. Elektrische Steuervorrichtung nach einem der Ansprüche 1 bis 5, **dadurch gekennzeichnet, dass** sie erste und zweite komplementäre Haltemittel (21) umfasst, die von dem Steuerorgan (1) bzw. von dem Aufnahmebereich (7) getragen werden.

7. Elektrische Steuervorrichtung nach Anspruch 6, **dadurch gekennzeichnet, dass** die ersten und zweiten Haltemittel (21) Einrastmittel umfassen.

8. Elektrische Steuervorrichtung nach Anspruch 6, **dadurch gekennzeichnet, dass** die ersten und zweiten Haltemittel (21) auf Seiten der Basis (3) bzw. einer Metalloberfläche (21A) an dem elektrischen Steuerorgan (1) magnetische Mittel, vorzugsweise Magneten mit entgegengesetzter Polarität oder einen Elektromagneten (21B), umfassen.

9. Elektrische Steuervorrichtung nach Anspruch 8, **dadurch gekennzeichnet, dass** sie ein System zum Verriegeln durch magnetisches Verflanschen umfasst, was ermöglicht, das Steuerorgan (1) an dem Aufnahmebereich (7) zu befestigen.

10. Elektrische Steuervorrichtung nach Anspruch 9, **dadurch gekennzeichnet, dass** das Verriegelungssystem ein Stimmerkennungsmittel umfasst, das von dem Anwender ausgegebene Schallinformationen in ein elektrisches Signal überführen kann, das von dem Verriegelungssystem genutzt werden kann, um seine Aktivierung oder seine Deaktivierung zu ermöglichen.

11. Elektrische Steuervorrichtung nach einem der Ansprüche 1 bis 10, **dadurch gekennzeichnet, dass** die Basis (3) wenigstens einen Detektor (19) für die Anwesenheit des elektrischen Steuerorgans umfasst, der dazu bestimmt ist, die Kommunikationsmittel (17) der Basis (3) zu aktivieren.

12. Elektrische Steuervorrichtung nach den Ansprüchen 7 und 11 zusammengenommen, **dadurch gekennzeichnet, dass** der Detektor (19) für die Anwesenheit des elektrischen Steuerorgans außerdem dazu bestimmt ist, den Elektromagneten zu aktivieren.

13. Elektrische Steuervorrichtung nach Anspruch 11 oder 12, **dadurch gekennzeichnet, dass** der wenigstens eine Anwesenheitsdetektor (19) einen optischen, taktilen oder magnetischen Sensor enthält.

14. Vorrichtung nach den Ansprüchen 4 oder 5, wenn abhängig von Anspruch 11, **dadurch gekennzeichnet, dass** die Kommunikationsmittel (17) zwischen dem elektrischen Steuerorgan (1) und der Basis (3) die Detektion der Anwesenheit des elektrischen Steuerorgans (1) ermöglichen.

15. Elektrische Steuervorrichtung nach einem der Ansprüche 1 bis 14, **dadurch gekennzeichnet, dass** sie auf Seiten des elektrischen Steuerorgans (1) Komponenten aufweist, die eine taktile Rückstellung ermöglichen.

16. Elektrische Steuervorrichtung nach einem der Ansprüche 1 bis 15, **dadurch gekennzeichnet, dass** der Aufnahmebereich (7) Markierungsmittel umfasst, die die Identifizierung seiner Funktion ermöglichen, vorzugsweise eine Hintergrundbeleuchtung.
